# EUROPEAN PATENT SPECIFICATION

(11) **EP 1 608 708 B1**
(45) Date of publication and mention of the grant of the patent: **11.01.2012**
(21) Application number: 04722872.1
(22) Date of filing: 24.03.2004
(51) Int. Cl.: C09B 62/513, C09B 62/09, C09B 67/22

(54) **MIXTURES OF REACTIVE DYES AND THEIR USE**
MISCHUNGEN FASERREAKTIVER FARBSTOFFE UND IHRE VERWENDUNG
MELANGES DE COLORANTS REACTIFS ET UTILISATION DE CES DERNIERS

(30) Priority: 01.04.2003 CH 565032003; 18.11.2003 EP 03104262
(43) Date of publication of application: 28.12.2005
(73) Proprietor: Huntsman Advanced Materials (Switzerland) GmbH, 4057 Basel (CH)
(72) Inventor: TZIKAS, Athanassios, CH-4133 Pratteln (CH); ROENTGEN, Georg, 79104 Freiburg (DE)
(86) International application number: PCT/EP2004/050353
(87) International publication number: WO 2004/088031

(56) References cited:
- EP-A- 0 582 893
- WO-A-00/06652
- WO-A-01/68775
- WO-A-03/080739
- US-A- 4 622 390
- T.OMURA: "Formaldehyde-induced discoloration: Design of Formaldehyde-fast Bisazo Dyes" DYES AND PIGMENTS, vol. 22, 1993, pages 99-116, XP002294809

## Description

The present invention relates to mixtures of reactive dyes that are suitable for dyeing or printing nitrogen-containing or hydroxy-group-containing fibre materials and yield dyeings or prints having good all-round fastness properties.

The practice of dyeing has recently led to higher demands being made on the quality of the dyeings and the profitability of the dyeing process. As a result, there continues to be a need for novel, readily available dyeing compositions having good properties, especially in respect of their application.

Dyeing nowadays requires reactive dyes that have, for example, sufficient substantivity and at the same time good ease of washing-off of unfixed dye. They should also exhibit a good tinctorial yield and high reactivity, the objective being especially to obtain dyeings having high degrees of fixing. In many cases, the build-up behaviour of reactive dyes is insufficient to meet the demands being made, especially when dyeing very deep shades.

Bisazo reactive dyes prepared from 1-hydroxy-8-aminonaphthalene-3,6-disulfonic acid as coupling component are disclosed in "Dyes and Pigments". 22 (1993), 99-116.

WO 01/68775 describes similar reactive dyes containing a fluoro- or chloro-triazine moiety which can be mixed with appropriate dyestuffs of the of the same class and yield dyeings exhibiting good wet fastness and resistance to oxidation.

The mixtures containing two bisazo reactive dyes disclosed in WO 03/080739. though exhibiting high substantivity coupled with the capacity for unfixed portions to be washed off, are not sufficiently stable to acid hydrolysis.

The problem underlying the present invention is therefore to provide new mixtures of reactive dyes that are particularly suitable for dyeing and printing fibre materials and that exhibit the qualities described above to a high degree. The dyes should also yield dyeings having good all-round fastness properties, for example fastness to light and to wetting.

The present invention accordingly relates to dye mixtures comprising at least one dye of formula 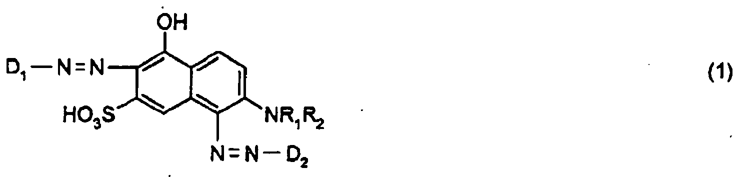 together with at least one dye of formula 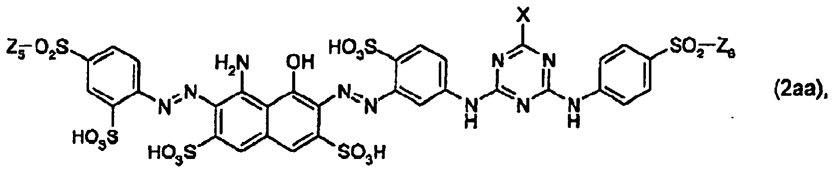 wherein
R₁ and R₂ are each independently of the other hydrogen or unsubstituted or substituted C₁-C₈alkyl,
D₁ and D₂ are each independently of the other a radical of formula 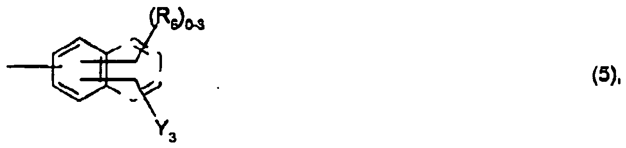 wherein
(Rₐ)₀₋₉ denotes from 0 to 3 identical or different substituents from the group halogen, C₁-C₄-alkyl, C₁-C₄alkoxy, carboxy, nitro and sulfo, Y₃ is a fibre-reactive radical of formula

-SO₂-Z (3a),

-NH-CO-(CH₂)ₘ-SO₂-Z (3b),

-CONH-(CH₂)ₙ-SO₂-Z (3c),

-NH-CO-CH(Hal)-CH₂Hal (3d),

-NH-CO-C(Hal)=CH₂ (3e)

or 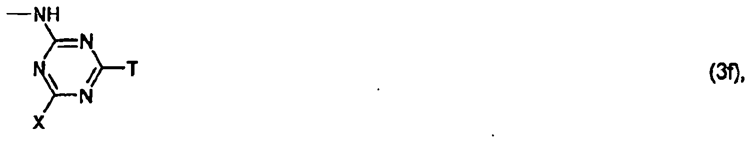 wherein
X is halogen, T has independently the same definitions as X, or is a non-fibre-reactive substituent or a fibre-reactive radical of formula

-NH-(CH₂)₂-3-SO₂-Z (4a),

-NH-(CH₂)₂₋₃-O-(CH₂)₂₋₃-SO₂-Z (4b),

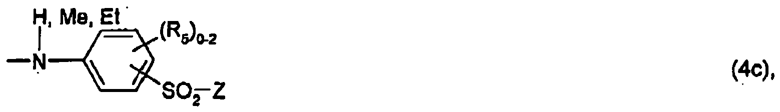

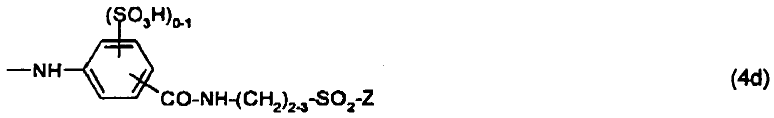

or 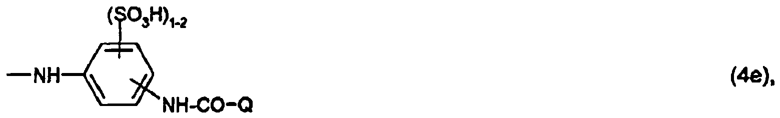 (R₅)₀₋₂ denotes from 0 to 2 identical or different substituents from the group halogen, C₁-C₄-alkyl, C₁-C₄alkoxy and sulfo,
Z is vinyl or a radical -CH₂-CH₂-U and U is a group removable under alkaline conditions,
Q is a group -CH(Hal)-CH₂Hal or -C(Hal)=CH₂,
m and n are each independently of the other the number 2, 3 or 4, and Hal is halogen,
Z₆ and Z₈ are each independently of the other vinyl or a radical -CH₂-CH₂-U and U is a group removable under alkaline conditions.

In the radical of formula (4c), Me is a methyl radical and Et is an ethyl radical. The mentioned radicals come into consideration, in addition to hydrogen, as substituents on the nitrogen atom.

As C₁-C₈alkyl there come into consideration for R₁ and R₂, each independently of the other, for example, methyl, ethyl, propyl, isopropyl, butyl, sec-butyl, tert-butyl, isobutyl, n-pentyl, n-hexyl, n-heptyl or n-octyl. Of interest is a C₁-C₄alkyl radical. The mentioned alkyl radicals may be unsubstituted or substituted, for example, by hydroxy, sulfo, sulfato, cyano, carboxy, C₁-C₄alkoxy or by phenyl, preferably by hydroxy, sulfato, C₁-C₄alkoxy or by phenyl. Preference is given to the corresponding unsubstituted radicals.

As C₁-C₄alkyl there come into consideration for R₅, for example, methyl, ethyl, n-propyl, isopropyl, n-butyl, sec-butyl, tert-butyl or isobutyl, preferably methyl or ethyl and especially methyl.

As C₁-C₄alkoxy there come into consideration for R₅, for example, methoxy, ethoxy, n-propoxy, isopropoxy, n-butoxy or isobutoxy, preferably methoxy or ethoxy and especially methoxy.

As halogen there come into consideration for R₅, for example, fluorine, chlorine or bromine, preferably chlorine or bromine and especially chlorine.

Preferably one of the radicals R₁ and R₂ is hydrogen and the other is one of the above-mentioned unsubstituted or substituted C₁-C₈alkyl radicals.

R₁ and R₂ are especially hydrogen.

(R₅)₀₋₂ preferably denotes from 0 to 2 identical or different substituents from the group C₁-C₄alkyl, C₁-C₄alkoxy and sulfo, especially methyl, methoxy and sulfo.

R₅ is especially hydrogen.

The radicals D₁ and D₂ in the dye mixtures according to the invention may comprise substituents customary for azo dyes.

Examples from the range of substituents that may be mentioned include: alkyl groups having from 1 to 12 carbon atoms, especially from 1 to 4 carbon atoms, such as methyl, ethyl, n- or iso-propyl, or n-, iso-, sec- or tert-butyl, alkoxy groups having from 1 to 8 carbon atoms, especially from 1 to 4 carbon atoms, such as methoxy, ethoxy, n- or iso-propoxy, or n-, iso-, sec- or tert-butoxy, C₁-C₄alkoxy substituted in the alkyl moiety, for example by hydroxy, C₁-C₄alkoxy or by sulfato, e.g. 2-hydroxyethoxy, 3-hydroxypropoxy, 2-sulfatoethoxy, 2-methoxyethoxy or 2-ethoxyethoxy, alkanoylamino groups having from 2 to 8 carbon atoms, especially C₂-C₄alkanoylamino groups such as acetylamino or propionylamino, benzoylamino or C₂-C₄alkoxycarbonylamino groups such as methoxycarbonylamino or ethoxycarbonyl-amino, amino, N-mono- or N,N-di-C₁-C₄alkylamino each unsubstituted or substituted in the alkyl moiety, for example, by hydroxy, sulfo, sulfato or by C₁-C₄alkoxy, e.g. methylamino, ethylamino, N,N-dimethyl- or N,N-diethylamino, sulfomethylamino, β-hydroxyethylamino, N,N-di(β-hydroxyethylamino), N-β-sulfatoethylamino, phenylamino unsubstituted or substituted in the phenyl moiety by methyl, methoxy, halogen or by sulfo, N-C₁-C₄alkyl-N-phenylamino unsubstituted or substituted in the alkyl moiety by hydroxy, sulfo or by sulfato or substituted in the phenyl moiety by methyl, methoxy, halogen or by sulfo, e.g. N-methyl-N-phenylamino, N-ethyl-N-phenylamino, N-β-hydroxyethyl-N-phenylamino or N-β-sulfoethyl-N-phenylamino, unsubstituted or sulfo-substituted naphthylamino, alkanoyl groups having from 2 to 8 carbon atoms, especially from 2 to 4 carbon atoms, e.g. acetyl or propionyl, benzoyl, alkoxycarbonyl having from 1 to 4 carbon atoms in the alkoxy radical, such as methoxycarbonyl or ethoxycarbonyl, alkylsuffonyl having from 1 to 4 carbon atoms, such as methylsulfonyl or ethylsulfonyl, phenyl- or naphthyl-sulfonyl, trifluoromethyl, nitro, cyano, hydroxy, halogen, such as fluorine, chlorine or bromine, carbamoyl, N-C₁-C₄alkylcarbamoyl, such as N-methylcarbamoyl or N-ethylcarbamoyl, sulfamoyl, N-C₁-C₄alkylsulfamoyl such as N-methylsulfamoyl, N-ethylsulfamoyl, N-propylsulfamoyl, N-isopropylsulfamoyl or N-butylsulfamoyl, N-(β-hydroxyethyl)sulfamoyl, N,N-di(β-hydroxyethyl)sulfamoyl, N-phenylsulfamoyl, ureido, carboxy, sulfomethyl, sulfo or sulfato and also fibre-reactive radicals. The alkyl radicals may additionally be interrupted by oxygen (-O-) or an amino group (-NH-, -N(C₁-C₄-alkyl)-).

In an interesting embodiment of the present invention, at least one of the radicals D₁ and D₂ carries at least one fibre-reactive group.

In a further interesting embodiment of the present invention, each of the radicals D₁ and D₂ carries at least one fibre-reactive group.

Fibre-reactive radicals are to be understood as being those which are capable of reacting with the hydroxy groups of cellulose, with the amino, carboxy, hydroxy and thiol groups in wool and silk or with the amino and possibly carboxy groups of synthetic polyamides to form covalent chemical bonds. The fibre-reactive radicals are generally bonded to the dye radical directly or *via* a bridging member. Suitable fibre-reactive radicals are, for example, those having at least one removable substituent on an aliphatic, aromatic or heterocyclic radical or those wherein the mentioned radicals contain a radical suitable for reaction with the fibre material, for example a vinyl radical.

Such fibre-reactive radicals are known *per se* and a large number of them are described, e.g. in Venkataraman "The Chemistry of Synthetic Dyes" volume 6, pages 1-209, Academic Press, New York, London 1972 or in US-A-5 684138.

X in the fibre-reactive radical of formula (3f) is, for example, fluorine, chlorine or bromine, preferably fluorine or chlorine and especially chlorine.

T is preferably a non-fibre-reactive substituent or a fibre-reactive radical of formula (4a), (4b), (4c), (4d) or (4e) and is especially a fibre-reactive radical of formula(4a), (4b), (4c), (4d) or (4e).

When T is a non-fibre-reactive substituent, that substituent may be, for example hydroxy; C₁-C₄alkoxy: C₁-C₄alkylthio unsubstituted or substituted, for example, by hydroxy, carboxy or by sulfo; amino; amino that is mono- or di-substituted by C₁-C₈alkyl, it being possible for the alkyl to be unsubstituted or further substituted, for example by sulfo, sulfato, hydroxy, carboxy or by phenyl, especially by sulfo or hydroxy, and interrupted one or more times by the radical -O-; cyclohexylamino; morpholino; N-C₁-C₄alkyl-N-phenylamino or phenylamino or naphthylamino, the phenyl or naphthyl being unsubstituted or substituted, for example, by C₁-C₄alkyl, C₁-C₄alkoxy, carboxy, sulfo or by halogen.

Examples of suitable non-fibre-reactive substituents T are amino, methylamino, ethylamino, β-hydroxyethylamino, N-methyl-N-p-hydroxyethylamino, N-ethyl-N-p-hydroxyethylamino, N,N-di-β-hydroxyethylamino, β-sulfoethylamino, cyclohexylamino, morpholino, 2-, 3- or 4-chlorophenylamino, 2-, 3- or 4-methylphenylamino, 2-, 3- or 4-methoxyphenylamino, 2-, 3- or 4-sulfophenylamino, disulfophenylamino, 2-, 3- or 4-carboxyphenylamino, 1- or 2-naphthylamino, 1-sulfo-2-naphthylamino, 4,8-disulfo-2-naphthylamino, N-ethyl-N-phenylamino, N-methyl-N-phenylamino, methoxy, ethoxy, n- or iso-propoxy and hydroxy.

As a non-fibre-reactive substituent, T is preferably C₁-C₄alkoxy, C₁-C₄alkylthio unsubstituted or substituted by hydroxy, carboxy or by sulfo, hydroxy, amino, N-mono- or N,N-di-C₁-C₄-alkylamino each unsubstituted or substituted in the alkyl moiety by hydroxy, sulfato or by sulfo, morpholino, phenylamino unsubstituted or substituted in the phenyl ring by sulfo, carboxy, acetylamino, chlorine, methyl or by methoxy, or N-C₁-C₄alkyl-N-phenylamino unsubstituted or substituted in the same manner, the alkyl being unsubstituted or substituted by hydroxy, sulfo or by sulfato, or naphthylamino unsubstituted or substituted by from 1 to 3 sulfo groups.

Especially preferred non-fibre-reactive substituents T are amino, N-methylamino,

N-ethylamino, N-β-hydroxyethylamino. N-methyl-N-β-hydroxyethylamino, N-ethyl-N-β-hydroxyethylamino, N,N-di-β-hydroxyethylamino, β-sulfoethylamino, morpholino, 2-, 3- or 4-carboxyphenylamino, 2-, 3- or 4-sulfophenylamino and N-C₁-C₄alkyl-N-phenylamino.

In the case of the fibre-reactive radicals T of formulae (4a) and (4b), Z is preferably β-chloroethyl. In the case of the fibre-reactive radicals T of formulae (4c) and (4d), Z is preferably vinyl or β-suffatoethyl.

When T is a fibre-reactive radical, T is preferably a radical of formula (4c) or (4d), especially of formula (4c).

Hal in the fibre-reactive radicals of formulae (3d), (3e) and (4e) is preferably chlorine or bromine, especiafly bromine.

As leaving group U there come into consideration, for example, -Cl, **-**Br, -F, -OSO₃H. SSO₃H, -OCO-CH₃. -OPO₃H₂, -OCO-C₆H₅, -OSO₂C₁-C₄alkyl or -OSO₂-N(C₁-C₄ alkyl)₂. U is preferably a group of formula -Cl, -OSO₃H, -SSO₃H, -OCO-CH₃, -OCO-C₆H₅ or -OPO₃H₂, especially -Cl or -OSO₃H and preferably -OSO₃H.

Examples of suitable radicals Z are accordingly vinyl, β-bromo- or β-chloro-ethyl, β-acetoxyethyl, β-benzoyloxyethyl, β-phosphatoethyl, β-sulfatoethyl and β-thiosulfatoethyl. Z is preferably vinyl, β-chloroethyl or β-sulfatoethyl.

D₁ and D₂ are each independently of the other preferably a radical of formula 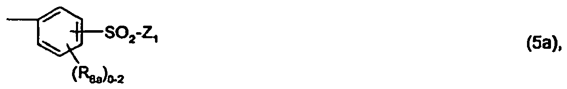 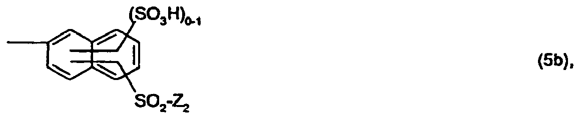 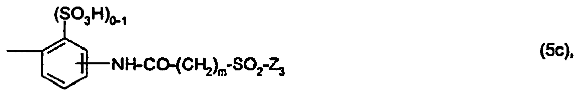 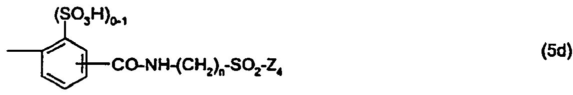 or 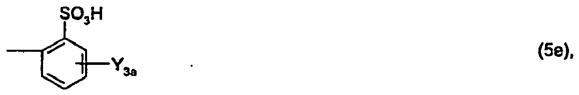 especially of formula (5a), (5b) or (5e), wherein
(R₆ₐ)₀₋₂ denotes from 0 to 2 identical or different substituents from the group halogen, C₁-C₄alkyl, C₁-C₄alkoxy and sulfo, especially methyl, methoxy and sulfo,
Y₃ₐ is α,β-dibromopropionylamino or α-bromoacryloylamino,
m is the number 2 or 3, especially 3,
n is the number 2 or 3, especially 2, and
Z₁, Z₂, Z₃ and Z₄ are each independently of the others vinyl, β-chloroethyl or β-sulfatoethyl.

Z₁ and Z₂ are preferably each independently of the other vinyl or β-sulfatoethyl.

Z₃ is preferably β-chloroethyl or β-sulfatoethyl, especially β-hloroethyl.

Z₄ is preferably β-chloroethyl or β-suffatoethyl, especially β-sulfatoethyl.

Each of r and s is preferably the number 1 and the sum of r + s is the number 2.

Preference is given to the dyes of formula (1) wherein
R₁ and R₂ are hydrogen, and
D₁ and D₂ are each independently of the other a radical of formula (5a), (5b), (5c), (5d) or (5e), preferably of formula (5a), (5b) or (5e) and especially of formula (5a).

The radicals D₁ and D₂ in the dyes of formula (1) are identical or non-identical, preferably non-idenfical.

Special preference is given to the dyes of formula (1) wherein
R₁ and R₂ are hydrogen,
D₁ is a radical of formula 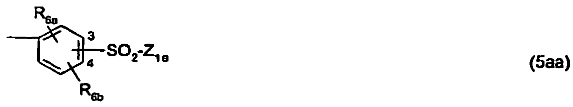 and
D₂ is a radical of formula 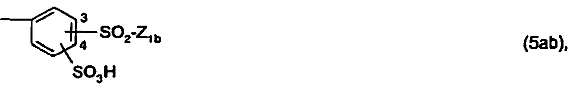 wherein
F₆ₐ and R_{6b} are each independently of the other methyl or methoxy, R₆ₐ is especially methyl and R_{6b} is especially methoxy, and
Z₁ₐ and Z_{1b} are each independently of the other vinyl, β-chloroethyl or β-sulfatoethyl.

The dye of formula (1) may also be a dye mixture comprising at least one compound of formulae (1a) and (1b) 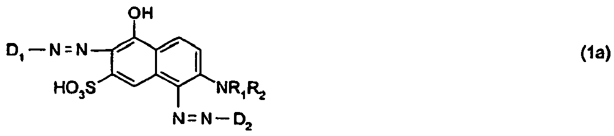 and 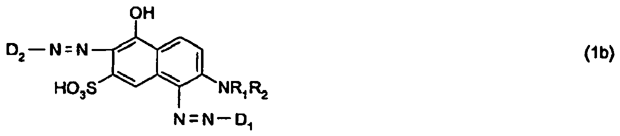 together with at least one compound of formulae (1c) and (1d) 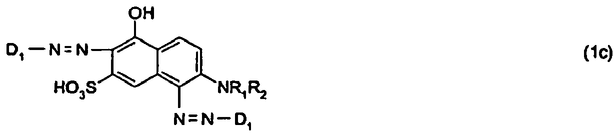 and 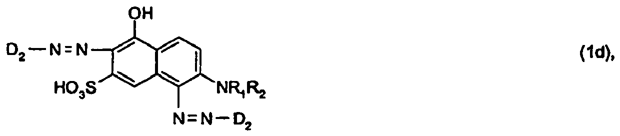 wherein
D₁ and D₂ are non-identical, and
R₁, R₂, D₁ and D₂ have the definitions and preferred meanings given above.

The dye mixtures according to the invention can be prepared, for example, by mixing the individual dyes. That mixing process is carried out, for example, in suitable mills, e.g. ball mills or pin mills, and also in kneaders or mixers.

Some of the dyes of formula (1) are known or can be prepared according to processes known *per se.* Dyes of formula (1) and mixtures of dyes of formulae (1a), (1b), (1c) and **(1d)** are disclosed, for example, in WO-A-00/06652. As concerns dyes of the formula (2aa) see the document US 4622390.

The present invention relates also to the novel dye of the above-mentioned formula (2aa), wherein the respective definitions and preferred meanings given above apply for X, Z₅ and Z₆.

The dye of formula (2aa) according to the invention is prepared, for example, by reacting with one another in suitable order approximately 1 molar equivalent each of a compound of formula 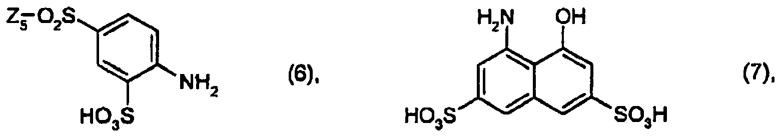 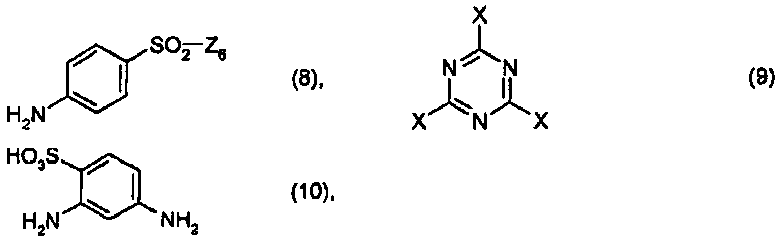 and
wherein X, Z₅ and Z₆ have the respective definitions and preferred meanings given above.

Suitable as a cyanuric halide of formula (9) is cyanuric chloride or cyanuric fluoride, especially cyanuric chloride.

Since the above-mentioned process steps can be carried out in different orders, if desired simultaneously, different process variants are possible. Generally the reaction is carried out stepwise, the order in which the simple reactions between the individual reaction components are carried out advantageously being selected according to the specific conditions. In a preferred embodiment:
(i) approximately one molar equivalent of a compound of formula (6) is diazotised and coupled with approximately one molar equivalent of a compound of formula (7);
(ii) approximately one molar equivalent of a compound of formula (8) is condensed with approximately one molar equivalent of a compound of formula (9);
(iii) approximately one molar equivalent of a compound of formula (10) is reacted with approximately one molar equivalent of the compound obtained according to (ii) to form a secondary condensation product; and
(iv) approximately one molar equivalent of the secondary condensation product obtained according to (iii) is diazotised and coupled with the compound obtained according to (i).

The diazotisation and coupling are carried out in customary manner, for example by diazotising the compound of formula (6) and the secondary condensation product obtained according to (iii) in a mineral acid solution, for example in a hydrochloric acid solution, with a nitrite, e.g. sodium nitrite, at low temperature, e.g. at from 0 to 5°C, and then coupling with the appropriate coupling component in a neutral to slightly acidic medium, e.g. at a pH of from 3 to 7, preferably from 3 to 4 or from 5.5. to 6.5, and at low temperatures, e.g. from 0 to 30°C.

The condensation reactions are generally carried out analogously to known processes, generally in an aqueous solution at temperatures of, for example, from 0 to 50°C and at a pH value of, for example, from 3 to 10.

The compounds of formulae (6), (7), (8), (9) and (10) are known or can be prepared analogously to known compounds.

The reactive dyes of formulae (1) and (2aa) in the dye mixtures according to the invention contain sulfo groups which are each present either in free sulfonic acid form or, preferably, in salt form, e.g. in the form of a sodium, lithium, potassium or ammonium salt or a salt of an organic amine, e.g. in triethanolammonium salt form.

The reactive dyes of formulae (1) and (2aa) and accordingly also the dye mixtures may comprise further additives, e.g. sodium chloride or dextrin.

The dyes of formulae (1) and (2aa) are present in the dye mixture according to the invention in a ratio by weight of, for example, from 1:99 to 99:1, preferably from 5:95 to 95:5 and especially from 10:90 to 90:10.

Where appropriate the dye mixtures according to the invention and the reactive dyes of formula (2aa) according to the invention may comprise further adjuvants that, for example, improve handling or increase the storage stability, for example buffers, dispersants or dust-removing agents. Such adjuvants are known to the person skilled in the art.

The dye mixtures according to the invention and the dyes of formula (2aa) according to the invention are suitable for dyeing and printing an extremely wide variety of materials, such as hydroxyl-group-containing or nitrogen-containing fibre materials. Examples are silk, leather, wool, polyamide fibres and polyurethanes and especially cellulosic fibre materials of all kinds. Such cellulosic fibre materials are, for example, the natural cellulosic fibres, such as cotton, linen and hemp, and also cellulose and regenerated cellulose. The dye mixtures according to the invention and the dyes according to the invention are also suitable for dyeing or printing hydroxyl-group-containing fibres present in blend fabrics, e.g. mixtures of cotton with polyester fibres or polyamide fibres. The dye mixtures according to the invention and the dyes according to the invention are especially suitable for dyeing or printing cellulosic fibre materials, especially those containing cotton. They can also be used to dye or print natural or synthetic polyamide fibre materials.

The present invention accordingly relates also to the use of the dye mixtures according to the invention and the dyes of formula (2aa) according to the invention in the dyeing or printing of hydroxyl-group-containing or nitrogen-containing, especially cellulosic, fibre materials.

The dye mixtures according to the invention and the dyes of formula (2aa) according to the invention can be applied to the fibre material and fixed to the fibre in a variety of ways, especially in the form of aqueous dye solutions and print pastes. They are suitable both for the exhaust process and for dyeing in accordance with the pad-dyeing process, according to which the goods are impregnated with aqueous, where appropriate salt-containing, dye solutions, and the dyes are fixed after alkali treatment or in the presence of an alkali, where appropriate with the action of heat or by storing at room temperature for several hours. After fixing, the dyeings or prints are rinsed thoroughly with cold and hot water, if desired with the addition of an agent that acts as a dispersant and promotes the diffusion of unfixed dye.

The dye mixtures according to the invention and the dyes according to the invention are distinguished by high reactivity, good fixing capacity and very good build-up capacity. Accordingly they can be used in the exhaust dyeing process at low dyeing temperatures and require only short steaming times in the pad-steam process. The degress of fixing are high and unfixed dye can be washed off readily, the difference between the degree of exhaust and the degree of fixing being remarkably small, that is to say the soaping loss is very small. The dye mixtures according to the invention and the dyes according to the invention are also especially suitable for printing, especially on cotton, and also for printing nitrogen-containing fibres, for example wool or silk or blend fabrics that contain wool or silk.

The dyeings and prints produced using the dye mixtures according to the invention and the dyes according to the invention have a high tinctorial strength and a high fibre-dye binding stability in both the acidic and the alkaline range, as well as good fastness to light and very good wet-fastness properties, such as fastness to washing, to water, to seawater, to cross-dyeing and to perspiration, and good fastness to pleating, to hot pressing and to rubbing. The dyeings obtained exhibit fibre-levelness and surface-levelness.

The dye mixtures according to the invention and the dyes of formula (2aa) according to the invention are also suitable as colorants for use in recording systems. Such recording systems are, for example, commercially available inkjet printers for paper or textile printing, or writing instruments, such as fountain pens and ballpoint pens and especially inkjet printers. For that purpose the dye mixture according to the invention or the dyes according to the invention is/are first brought into a form suitable for use in recording systems. A suitable form is, for example, an aqueous ink that comprises the dye mixture according to the invention or the dyes according to the invention as colorant The inks can be prepared in customary manner by mixing together the individual constituents in the desired amount of water.

Substrates that come into consideration include the above-mentioned hydroxyl-group-containing or nitrogen-containing fibre materials, especially cellulosic fibre materials. The substrate is preferably a textile fibre material.

Also suitable as substrates are paper or plastics films.

Examples of paper that may be mentioned include commercially available inkjet paper, photo paper, glossy paper, plastus-coated paper, for example Epson inkjet paper, Epson photo paper, Epson glossy paper, Epson glossy film, HP special inkjet paper, Encad photo gloss paper, Ilford photo paper. Plastics films are, for example, transparent or cloudy/opaque. Suitable plastics films are, for example, 3M transparency film.

Depending on the type of use, for example textile printing or paper printing, it may be necessary, for example, to adapt the viscosity or other physical properties of the ink accordingly, especially those properties having an effect on the affinity for the substrate in question.

The dyes used in the aqueous inks should preferably have a low salt content, that is to say they should have a total content of salts of less than 0.5 % by weight, based on the weight of the dyes. Dyes that have relatively high salt contents as a result of their preparation and/or as a result of the subsequent addition of diluents can be desalted, for example, by membrane separation procedures, such as ultrafiltration, reverse osmosis or dialysis.

The inks preferably have a total content of dyes of from 1 to 35 % by weight, especially from 1 to 30 % by weight and preferably from 1 to 20 % by weight, based on the total weight of the ink. As a lower limit, a limit of 1.5 % by weight, preferably 2 % by weight and especially 3 % by weight, is preferred.

The inks may comprise water-miscible organic solvents, for example C₁-C₄alcohols, such as methanol, ethanol, n-propanol, isopropanol, n-butanol, sec-butanol, tert-butanol and isobutanol; amides, e.g. dimethylformamide and dimethylacetamide; ketones or ketone alcohols, e.g. acetone and diacetone alcohol; ethers, e.g. tetrahydrofuran and dioxane; nitrogen-containing heterocyclic compounds, e.g. N-methyl-2-pyrrolidone and 1,3-dimethyl-2-imidazolidone; polyalkylene glycols, e.g. polyethylene glycol and polypropylene glycol; C₂-C₆-alkylene glycols and thioglycols, e.g. ethylene glycol, propylene glycol, butylene glycol, triethylene glycol, thiodiglycol, hexylene glycol and diethylene glycol; further polyols, e.g. glycerol and 1,2,6-hexanetriol; and C₁-C₄alkyl ethers of polyhydric alcohols, e.g. 2-methoxyethanol, 2-(2-methoxyethoxy)ethanol, 2-(2-ethoxyethoxy)ethanol, 2-[2-(2-methoxyethoxy)-ethoxylethanol and 2-[2-(2-ethoxyethoxy)ethoxy]ethanol; preferably N-methyl-2-pyrrolidone, diethylene glycol, glycerol or especially 1,2-propytene glycol, usually in an amount of from 2 to 30 % by weight, especially from 5 to 30 % by weight and preferably from 10 to 25 % by weight, based on the total weight of the ink.

The inks may also comprise solubilisers, e.g. ε-caprolactam.

The inks may comprise thickeners of natural or synthetic origin *inter alia* for the purpose of adjusting the viscosity.

Examples of thickeners that may be mentioned include commercially available alginate thickeners, starch ethers or locust bean flour ethers, especially sodium alginate on its own or in admixture with modified cellulose, e.g. methylcellulose, ethylcellulose, carboxymethylcellulose, hydroxyethylcellutose, methylhydroxyethyloellulose, hydroxypropyl cellulose or hydroxypropyl methylcellulose, especially with preferably from 20 to 25 % by weight carboxymethylcellulose. Synthetic thickeners that may be mentioned are, for example, those based on poly(meth)acrylic acids or poly(meth)acrylamides and also polyalkylene glycols having a molecular weight of e.g. from 2000 to 20 000, for example polyethylene glycol or polypropylene glycol or the mixed polyalkylene glycols of ethylene oxide and propylene oxide.

The inks comprise such thickeners, for example, in an amount of from 0.01 to 2 % by weight, especially from 0.01 to 1 % by weight and preferably from 0.01 to 0.5 % by weight, based on the total weight of the ink.

The inks may also comprise buffer substances, e.g. borax, borates, phosphates, polyphosphates or citrates. Examples that may be mentioned include borax, sodium borate, sodium tetraborate, sodium dihydrogen phosphate, disodium hydrogen phosphate, sodium tripolyphosphate, sodium pentapolyphosphate and sodium citrate. They are used especially in amounts of from 0.1 to 3 % by weight, preferably from 0.1 to 1 % by weight, based on the total weight of the ink, in order to establish a pH value of, for example, from 4 to 9, especially from 5 to 8.5.

As further additives, the inks may comprise surfactants or humectants.

Suitable surfactants include commercially available anionic or non-ionic surfactants. As humectants in the inks according to the invention there come into consideration, for example, urea or a mixture of sodium lactate (advantageously in the form of a 50 % to 60 % aqueous solution) and glycerol and/or propylene glycol in amounts of preferably from 0.1 to 30 % by weight, especially from 2 to 30 % by weight

Preference is given to inks having a viscosity of from 1 to 40 mPa·s, especially from 1 to 20 mPa·s and preferably from 1 to 10 mPa·s.

The inks may also comprise customary additives, such as antifoam agents or especially preservatives that inhibit the growth of fungi and/or bacteria. Such additives are usually used in amounts of from 0.01 to 1 % by weight, based on the total weight of the ink.

Preservatives that come into consideration include formaldehyde-yielding agents, e.g. paraformaldehyde and trioxane, especially aqueous, approximately 30 to 40 % by weight formaldehyde solutions, imidazole compounds, e.g. 2-(4-thiazolyl)benzimidazole, thiazole compounds, e.g. 1,2-benzisothialin-3-one or 2-n-octyl-isothiazolin-3-one, iodine compounds, nitriles, phenols, haloalkylthio compounds or pyridine derivatives, especially 1,2-benzisothiazolin-3-one or 2-n-octyl-isothiazolin-3-one. A suitable preservative is e.g. a 20 % by weight solution of 1,2-benzisothiazolin-3-one in dipropylene glycol (Proxel^{®} GXL).

The inks may also comprise further additives, such as fluorinated polymers or telomers, e.g. polyethoxyperfluoroalcohols (Forafac^{®} or Zonyl^{®} products) in an amount of e.g. from 0.01 to 1 % by weight, based on the total weight of the ink.

In the inkjet printing method, individual droplets of the ink are sprayed onto a substrate in a controlled manner from a nozzle. For this purpose, predominantly the continuous inkjet method and the drop-on-demand method are used. In the continuous inkjet method, the droplets are produced continuously and any droplets not required for the printing are conveyed to a collecting vessel and recycled, whereas in the drop-on-demand method droplets are produced and printed as required; that is to say droplets are produced only when required for the printing. The production of the droplets can be effected, for example, by means of a piezo-inkjet head or by means of thermal energy (bubble jet). Printing by means of a piezo-inkjet head and printing in accordance with the continuous inkjet method are preferred.

The present invention accordingly relates also to aqueous inks comprising the dye mixtures according to the invention or the dyes of formula (2aa) according to the invention and to the use of such inks in an inkjet printing method for the printing of various substrates, especially textile fibre materials, the definitions and preferred meanings mentioned above applying to the dye mixtures, the inks and the substrates.

The following Examples serve to illustrate the invention. Unless otherwise indicated, the temperatures are given in degrees Celsius, parts are parts by weight and percentages relate to % by weight. Parts by weight relate to parts by volume in a ratio of kilograms to litres.

Example 1: 100 parts of a cotton fabric are introduced at a temperature of 60°C into a dyebath containing 0.6 part of the dye of formula 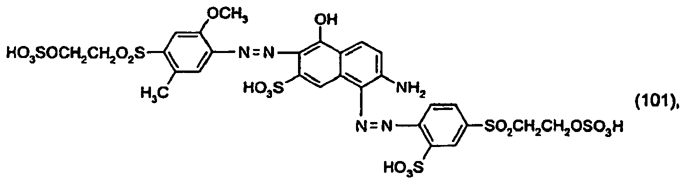 5.4 parts of the dye of formula 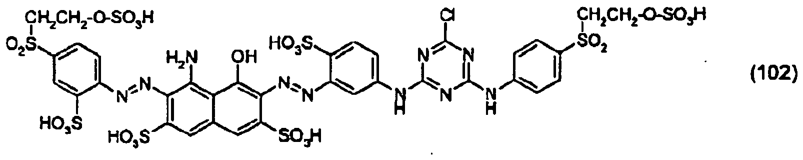 and 60 parts of sodium chloride in 1000 parts of water. After 45 minutes at 60°C, 20 parts of calcined soda are added. The temperature of the dyebath is maintained at 60°C for a further 45 minutes. The dyed fabric is then rinsed and dried in customary manner. A navy blue dyeing having good fastness properties is obtained.

Examples 3 to 59: By proceeding as in Example 1, but using instead of 0.6 part of the dye of formula (101) 0.6 part of the dye of the general formula 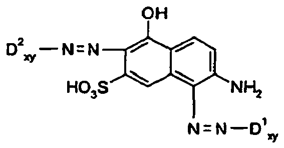 wherein D¹_{xy} and D² _{xy} each correspond to the radicals indicated in Table 1 and those radicals are as defined in Table 2, there are likewise obtained navy blue dyeings having good fastness properties.

**Table 1:**

| Ex. | D¹_{xy} | D²_{xy} | shade |
|---|---|---|---|
| | | | |
| 3 | D₁₁ | D₁₁ | navy blue |
| 4 | D₁₂ | D₁₂ | navy blue |
| 5 | D₁₃ | D₁₃ | navy blue |
| 6 | D₁₄ | D₁₄ | navy blue |
| 7 | D₁₅ | D₁₅ | navy blue |
| 8 | D₁₆ | D₁₆ | navy blue |
| 9 | D₁₇ | D₁₇ | navy blue |
| 10 | D₁₈ | D₁₈ | navy blue |
| 11 | D₁₉ | D₁₉ | navy blue |
| 12 | D₂₀ | D₂₀ | navy blue |
| 13 | D₂₁ | D₂₁ | navy blue |
| 14 | D₂₂ | D₂₂ | navy blue |
| 15 | D₂₃ | D₂₃ | navy blue |
| 16 | D₂₄ | D₂₄ | navy blue |
| 17 | D₂₅ | D₂₅ | navy blue |
| 18 | D₂₆ | D₂₆ | navy blue |
| 19 | D₁₀ | D₁₂ | navy blue |
| 20 | D₁₂ | D₁₀ | navy blue |
| 21 | D₁₀ | D₁₃ | navy blue |
| 22 | D₁₃ | D₁₀ | navy blue |
| 23 | D₁₀ | D₂₀ | navy blue |
| 24 | D₂₁ | D₁₃ | navy blue |
| 25 | D₁₀ | D₁₄ | navy blue |
| 26 | D₁₀ | D₁₅ | navy blue |
| 27 | D₁₀ | D₁₆ | navy blue |
| 28 | D₁₀ | D₁₇ | navy blue |
| 29 | D₁₀ | D₁₈ | navy blue |
| 30 | D₁₀ | D₁₉ | navy blue |
| 31 | D₁₀ | D₂₁ | navy blue |
| 32 | D₁₀ | D₂₂ | navy blue |
| 33 | D₁₀ | D₂₃ | navy blue |
| 34 | D₁₀ | D₂₄ | navy blue |
| 35 | D₁₀ | D₂₅ | navy blue |
| 36 | D₁₀ | D₂₆ | navy blue |
| 37 | D₁₃ | D₂₀ | navy blue |
| 38 | D₁₄ | D₁₁ | navy blue |
| 39 | D₂₉ | D₃₂ | navy blue |
| 40 | D₂₉ | D₃₀ | navy blue |
| 41 | D₂₉ | D₁₀ | navy blue |
| 42 | D₂₉ | D₃₁ | navy blue |
| 43 | D₃₃ | D₃₃ | navy blue |
| 44 | D₂₈ | D₂₈ | navy blue |
| 45 | D₂₈ | D₂₇ | navy blue |
| 46 | D₁₀ | D₂₉ | navy blue |
| 47 | D₁₀ | D₃₁ | navy blue |
| 48 | D₁₁ | D₃₁ | navy blue |
| 49 | D₃₁ | D₁₁ | navy blue |
| 50 | D₃₃ | D₁₁ | navy blue |
| 51 | D₃₄ | D₃₄ | navy blue |
| 52 | D₂₁ | D₃₄ | navy blue |
| 53 | D₃₄ | D₂₁ | navy blue |
| 54 | D₃₄ | D₁₀ | navy blue |
| 55 | D₁₀ | D₃₄ | navy blue |
| 56 | D₃₁ | D₃₁ | navy blue |
| 57 | D₁₀ | D₃₃ | navy blue |
| 58 | D₁₃ | D₃₂ | navy blue |
| 59 | D₁₉ | D₂₁ | navy blue |

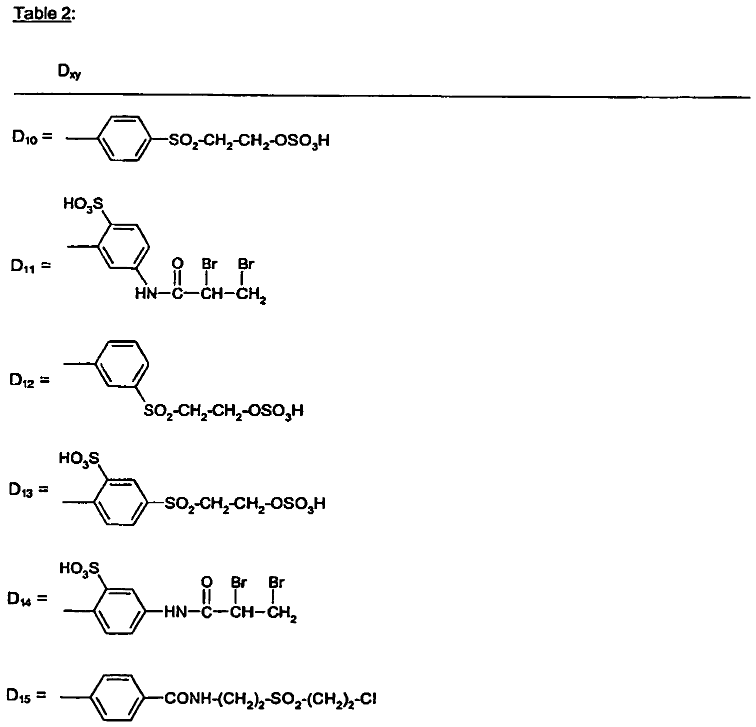

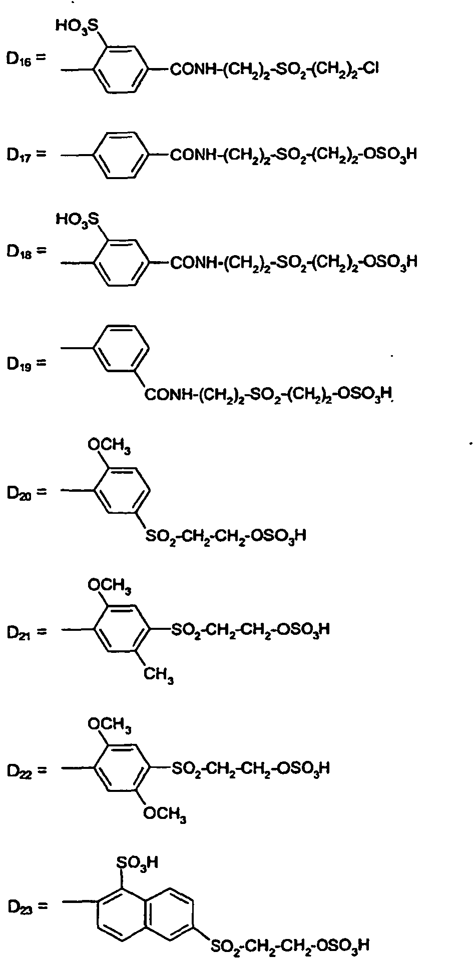

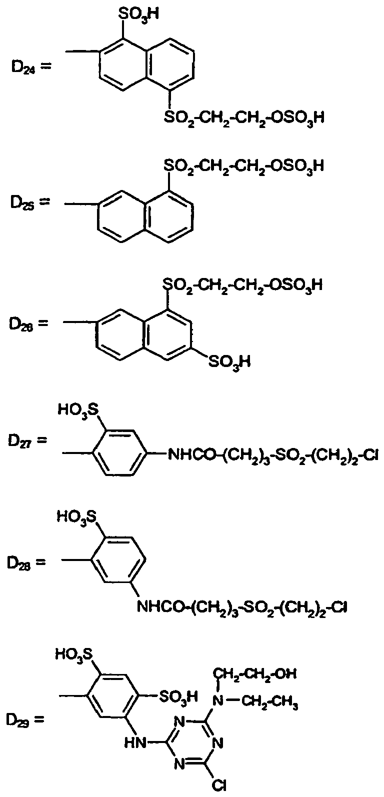

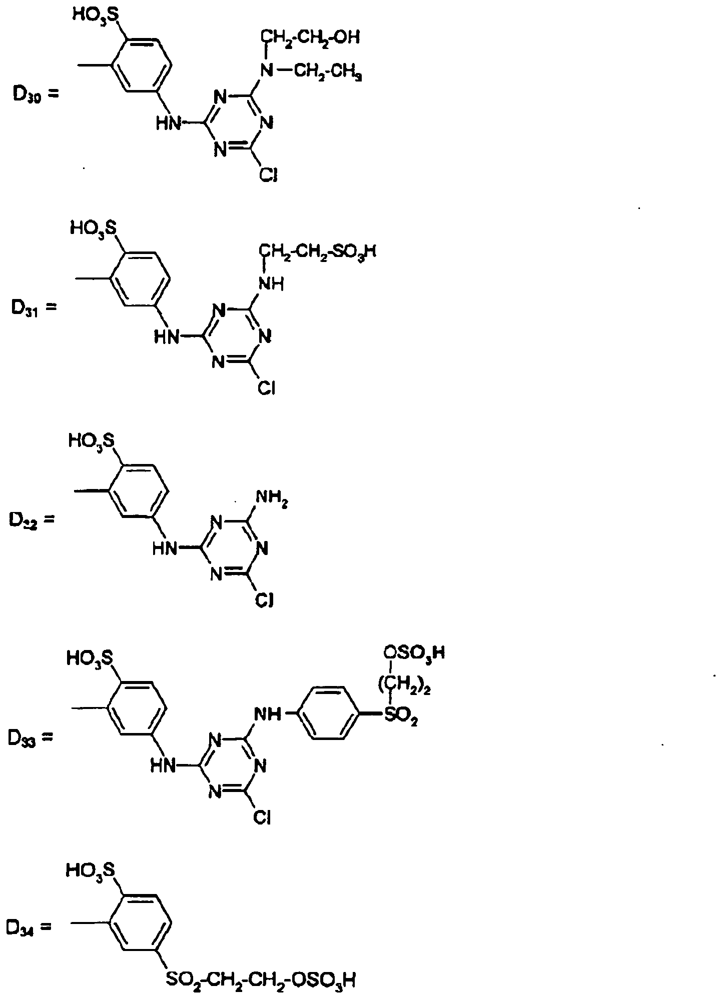

Example 60 (does not relate to claimed subject-matter) By proceeding as in Example 1, but using instead of 5.4 parts of the dye of formula (102) 5.4 parts of the dye of formula 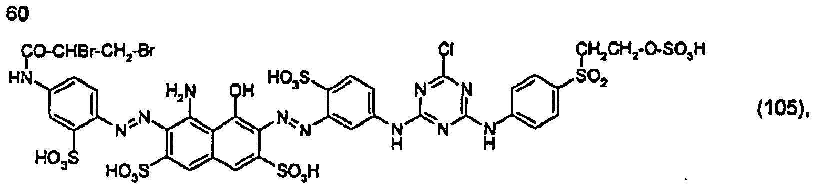 there are likewise obtained navy blue dyeings having good fastness properties.

### Preparation Example:

(a) 36.1 parts of 4-(β-sulfatoethylsulfonyl)aniline-2-Sulfonic acid are suspended in 300 parts of water, dissolved to neutral with saturated sodium carbonate solution and cooled to 0°C; 7 parts of sodium nitrite, 60 parts of ice and 30 parts of concentrated hydrochloric acid are added and the mixture is diazotised for 2 hours. Excess nitrite is then destroyed using sulfamic acid.
(b) To the diazo solution according to (a) there is added a solution of 31.9 parts of 1-amino-8-hydroxynaphthalene-3,6-disulfonic acid (H acid) in 500 parts of water, which solution has been adjusted to a pH of 4 with hydrochloric acid. During the coupling reaction the pH is maintained at from 3 to 3.5 with sodium acetate. There is obtained the monoazo dye that corresponds to the formula 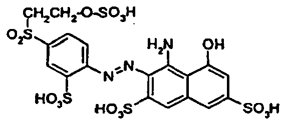 in the form of the free acid.
(c) A neutral solution of 28.1 parts of 4-(β-sulfatoethylsulfonyl)aniline in 100 parts of water is added to a suspension obtained by stirring a solution of 19.5 parts of cyanuric chloride in 80 parts of acetone into a mixture of 200 parts of water and 200 parts of ice. The condensation reaction is continued for 1 hour with stirring at from 0 to 5°C and at a pH of from 3 to 4. The pH is maintained at that value by the addition of sodium hydrogen carbonate.
(d) A neutral solution of 17.6 parts of 1,3-phenylenediamine-4-sulfonic acid in 180 parts of water is added to the suspension obtained according to (c), and the mixture is stirred for one day at 25°C and at a pH of from 6.5 to 7.2 There is obtained a compound that corresponds to the formula 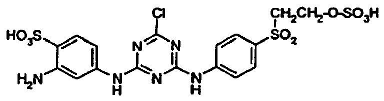 in the form of the free acid.
(e) 250 parts of ice and 60 parts of conc. hydrochloric acid are then added to the solution according to (d), and the mixture is cooled to 0°C and diazotised slowly at that temperature with 7 parts of sodium nitrite.
(f) The diazo solution according to (e) is adjusted to a pH of from 5.5 to 6 with sodium hydrogen carbonate and coupled with the monoazo dye obtained according to (b) at a pH of from 5.8 to 62. Once the reaction is complete, the reaction product is precipitated by the addition of potassium chloride, filtered off, washed with saturated potassium chloride solution and dried *in vacuo* at 40°C. There is obtained a compound that corresponds to the formula 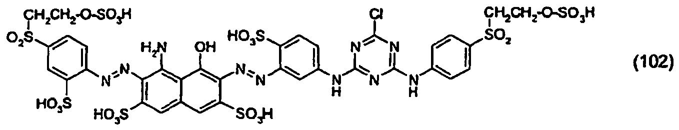
in the form of the free acid, and dyes cotton a navy blue shade with good all-round fastness properties.

### Dyeing procedure I

100 parts of cotton fabric are placed at 60°C in 1500 parts of a dyebath containing 45 g/l of sodium chloride and 2 parts of the reactive dye obtained according to the Preparation Example. After 45 minutes at 60°C, 20 g/l of calcined soda are added. Dyeing is continued at that temperature for a further 45 minutes. The dyed goods are then rinsed, soaped at the boil for a quarter of an hour with a non-ionic detergent, rinsed again and dried.

As an alternative to the described procedure, dyeing can be carried out at 80°C instead of at 60°C.

### Dyeing procedure II

0.1 part of the dye according to the Preparation Example is dissolved in 200 parts of water, and 0.5 part of sodium sulfate, 0.1 part of a levelling agent (based on the condensation product of a higher aliphatic amine and ethylene oxide) and 0.5 part of sodium acetate are added. The pH is then adjusted to a value of 5.5 using acetic acid (80%). The dyebath is heated at 50°C for 10 minutes and then 10 parts of a woollen fabric are added. The dyebath is heated to a temperature of 100°C in the course of about 50 minutes and dyeing is carried out at that temperature for 60 minutes. The dyebath is then cooled to 90°C and the dyed goods are removed. The woollen fabric is washed with hot and cold water, then spun and dried.

### Printing procedure I

While stirring rapidly, 3 parts of the dye according to the Preparation Example are sprinkled into 100 parts of a stock thickener containing 50 parts of 5 % sodium alginate thickener, 27.8 parts of water, 20 parts of urea, 1 part of sodium m-nitrobenzenesulfonate and 1.2 parts of sodium hydrogen carbonate. The print paste so obtained is used to print a cotton fabric, drying is carried out and the resulting printed fabric is steamed in saturated steam at 102°C for 2 minutes. The printed fabric is then rinsed, if desired soaped at the boil and again rinsed, and then dried.

### Printing procedure II

(a) Mercerised cotton satin is pad-dyed using a liquor containing 30 g/l of sodium carbonate and 50 g/l of urea (liquor uptake 70%) and dried.
(b) The cotton satin pretreated according to Step (a) is printed using an aqueous ink containing
   - 15 % by weight of the reactive dye of formula (102) according to the Preparation Example,
   - 15 % by weight of 1,2-propylene glycol, and
   - 70 % by weight of water
      using a drop-on-demand inkjet head (bubble jet). The print is dried completely and fixed in saturated steam at 102°C for 8 minutes, cold-rinsed, washed off at the boil, rinsed again and dried.

## Claims

1. A dye mixture comprising at least one dye of formula 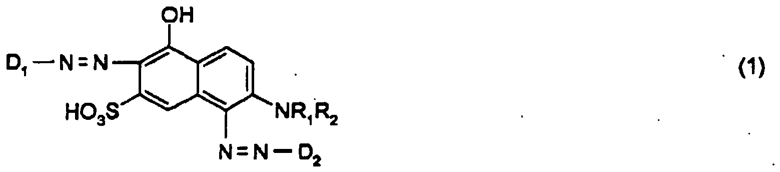 together with at least one dye of formula 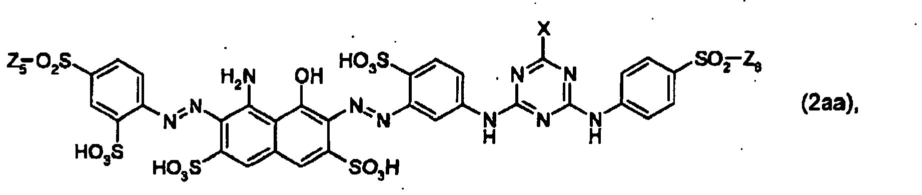 wherein
R₁ and R₂ are each independently of the other hydrogen or unsubstituted or substituted C₁-C₈ alkyl,
D₁ and D₂ are each independently of the other a radical of formula 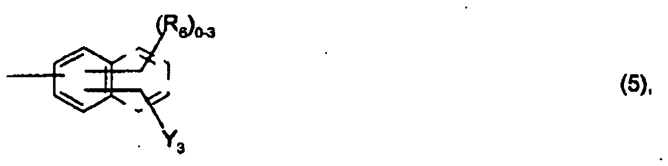 wherein
(R₆)₀₋₃ denotes from 0 to 3 identical or different substituents from the group halogen, C₁-C₄-alkyl, C₁-C₄alkoxy, carboxy, nitro and suffo,
Y₃ is a fibre-reactive radical of formula
-SO₂-Z (3a),
-NH-CO-(CH₂)ₘ-SO₂-Z (3b),
-CONH-(CH₂)ₙ-SO₂-Z (3c),
-NH-CO-CH(Hal)-CH₂Hal (3d),
-NH-CO-C(Hal)=CH₂ (3e)
or 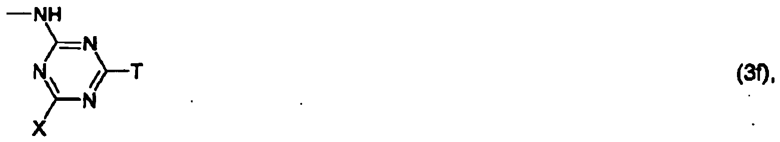 wherein
X is halogen, T has independently the same definitions as X, or is a non-fibre-reactive
substituent or a fibre-reactive radical of formula
-NH-(CH₂)₂₋₃-SO₂-Z (4a),
-NH-(CH₂)₂₋₃₋O-(CH₂)₂₋₃-SO₂-Z (4b), 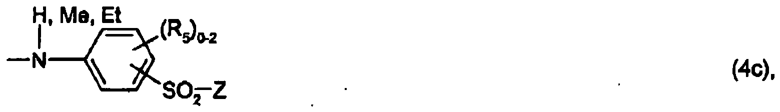 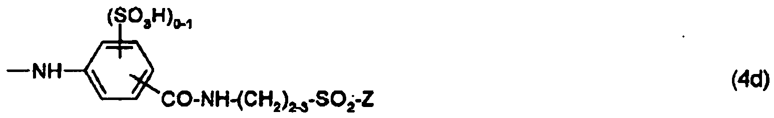
or 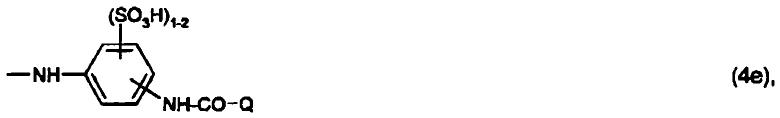 (R₅)₀₋₂ denotes from 0 to 2 identical or different substituents from the group halogen, C₁-C₄-alkyl, C₁-C₄alkoxy and suffo,
Z is vinyl or a radical -CH₂-CH₂-U and U is a group removable under alkaline conditions, Q is a group -CH(Hal)-CH₂-Hal or -C(Hal)=CH₂,
m and n are each independently of the other the number 2, 3 or 4, and
Hal is halogen,
Z₅ and Z₈ are each independently of the other vinyl or a radical -CH₂-CH₂-U and U is a group removable under alkaline conditions.

2. A dye mixture according to claim 1, wherein
D₁ and D₂ are each independently of the other a radical of formula 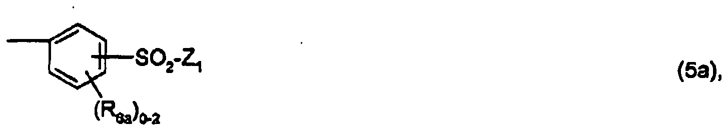 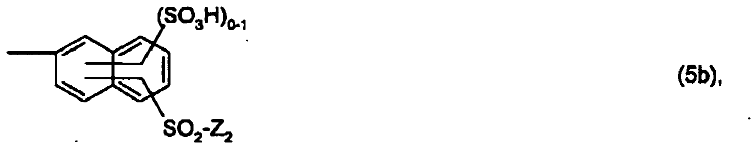 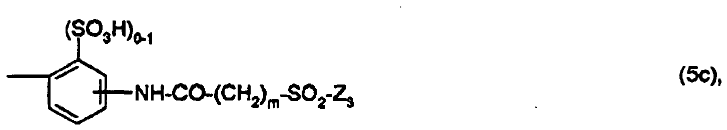 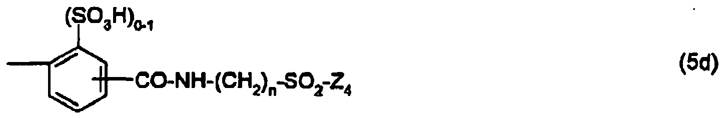 or 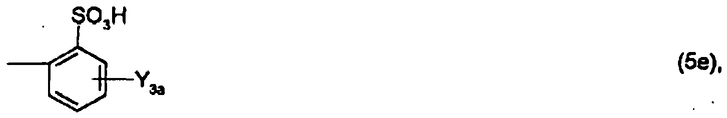 wherein
(R₈ₐ)(₀₋₂ denotes from 0 to 2 identical or different substituents from the group halogen, C₁-C₄-alkyl, C₁-C₄alkoxy and sulfo,
Y₈ₐ is α,β-dibromoproplonylamino or α-bromoacryloylamino,
m is the number 2 or 3,
n is the number 2 or 3, and
Z₁ Z₂, Z₃ and **Z₄** are each independently of the others vinyl, β-chloroethyl or β-sulfatoethyl.

3. A dye mixture according to either claim 1 or claim 2, wherein
R₁ and R₂ are hydrogen.

4. A dye mixture according to any one of claims 1 to 3, wherein
R₁ and R₂ are hydrogen,
D₁ is a radical of formula 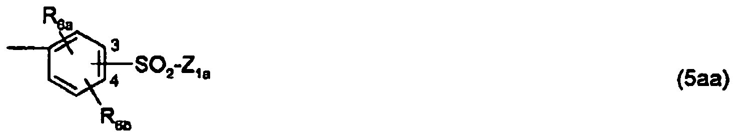 and
D₂ is a radical of formula 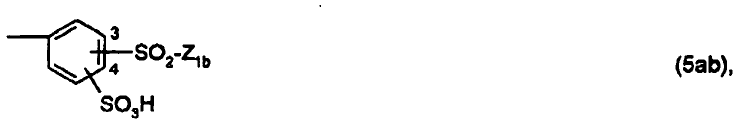 wherein
R₆ₐ and R_{6b} are each independently of the other methyl or methoxy, and
Z₁ₐ, and Z_{1b} are each independently of the other vinyl, β-chloroethyl or β-sulfatoethyl.

5. Use of a dye mixture according to any one of claims 1 to 4 in the dyeing or printing of hydroxyl-group-containing or nitrogen-containing fibre materials.

6. A dye of formula 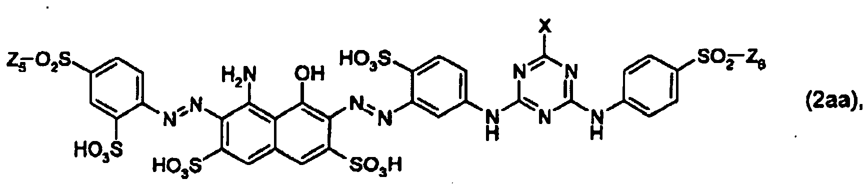 wherein
X is halogen, and
Z₆ and Z₈ are each independently of the other vinyl or a radical -CH₂CH₂-U and U is a group removable under alkaline conditions.

7. Use of a dye of formula (2aa) according to claim 6 in the dyeing or printing of hydroxyl-group-containing or nitrogen-containing fibre materials.

8. An aqueous ink comprising a dye mixture according to claim 1 or a dye according to claim 6.

9. Use of an aqueous ink according to claim 8 in an inkjet printing method for printing hydroxyl-group-containing or nitrogen-containing fibre materials.

## Patentansprüche

1. Farbstoffmischung, umfassend wenigstens einen Farbstoff der Formel 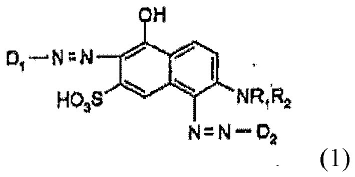 zusammen mit wenigstens einem Farbstoff der Formel 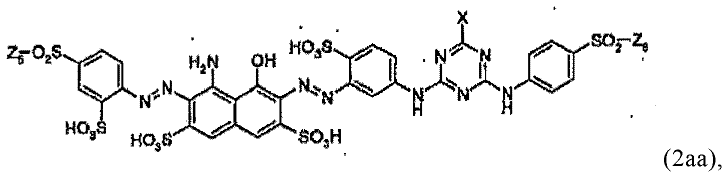 wobei
R₁ und R₂ jeweils unabhängig voneinander Wasserstoff oder unsubstituiertes oder substituiertes C₁-C₈-Alkyl sind,
D₁ und D₂ jeweils unabhängig voneinander ein Rest der Formel 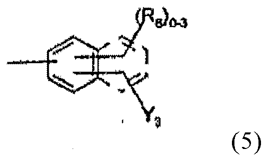 sind, wobei
(R₆)₀₋₃ von 0 bis 3 identische oder unterschiedliche Substituenten aus der Gruppe Halogen, C₁-C₄-Alkyl, C₁-C₄-Alkoxy, Carboxy, Nitro und Sulfo bezeichnet,
Y₃ ein faserreaktiver Rest der Formel
SO₂-Z. (3a),
-NH-CO-(CH₂)ₘ-SO₂-Z (3b),
-CONH-(CH₂)ₙ-SO₂-Z (3c),
-NH-CO-CH(Hal)-CH₂-Hal (3d),
-NH-CO-C(Hal)=CH₂ (3e)
oder 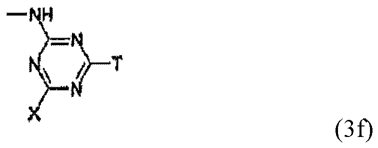 ist, wobei X Halogen ist, T unabhängig die selben Definitionen wie X aufweist oder ein nichtfaserreaktiver Substituent oder ein faserreaktiver Rest der Formel
-NH-(CH₂)₂₋₃-SO₂-Z (4a),
-NH-(CH₂)₂₋₃-O-(CH₂)₂₋₃-SO₂-Z (4b), 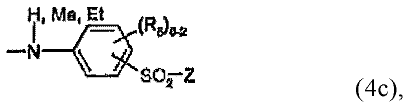 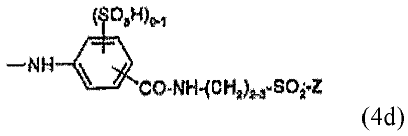
oder 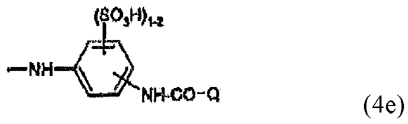 ist, (R₅)₀₋₂ von 0 bis 2 identische oder unterschiedliche Substituenten aus der Gruppe Halogen, C₁-C₄-Alkyl, C₁-C₄-Alkoxy und Sulfo bezeichnet,
Z Vinyl oder ein -CH₂-CH₂-U-Rest ist und U eine unter alkalischen Bedingungen entfernbare Gruppe ist,
Q eine Gruppe -CH(Hal)-CH₂-Hal oder -C(Hal)=CH₂ ist,
m und n jeweils unabhängig voneinander die Zahl 2, 3 oder 4 sind und
Hal Halogen ist,
Z₅ und Z₆ jeweils unabhängig voneinander Vinyl oder ein -CH₂-CH₂-U-Rest sind und U eine unter alkalischen Bedingungen entfernbare Gruppe ist.

2. Farbstoffmischung gemäß Anspruch 1, wobei
D₁ und D₂ jeweils unabhängig voneinander ein Rest der Formel 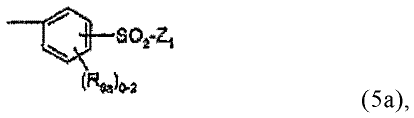 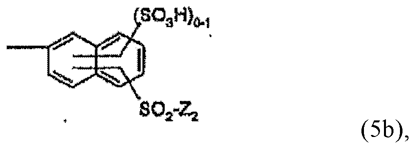 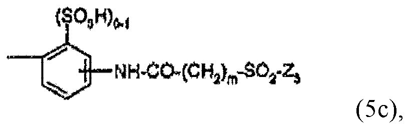 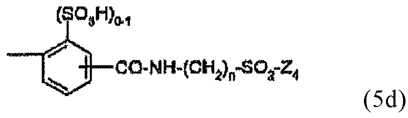 oder 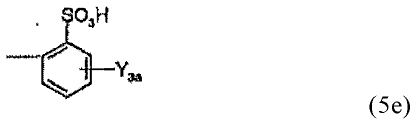 sind, wobei
(R₈ₐ)₀₋₂ von 0 bis 2 identische oder unterschiedliche Substituenten aus der Gruppe Halogen, C₁-C₄-Alkyl, C₁-C₄-Alkoxy und Sulfo bezeichnet,
Y₃ₐ α,β-Dibrompropionylamino oder α-Bromacryloylamino ist,
m die Zahl 2 oder 3 ist,
n die Zahl 2 oder 3 ist und
Z₁, Z₂, Z₃ und Z₄ jeweils unabhängig voneinander Vinyl, β-Chlorethyl oder β-Sulfatoethyl sind.

3. Farbstoffmischung gemäß entweder Anspruch 1 oder Anspruch 2, wobei R₁ und R₂ Wasserstoff sind.

4. Farbstoffmischung gemäß irgendeinem der Ansprüche 1 bis 3, wobei R₁ und R₂ Wasserstoff sind,
D₁ ein Rest der Formel 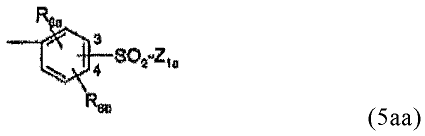 ist und D₂ ein Rest der Formel 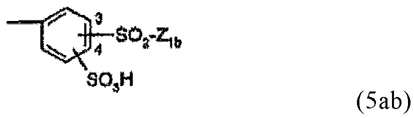 ist, wobei
R₈ₐ und R_{8b} jeweils unabhängig voneinander Methyl oder Methoxy sind und
Z₁ₐ und Z_{1b} jeweils unabhängig voneinander Vinyl, β-Chlorethyl oder β-Sulfatoethyl sind.

5. Verwendung einer Farbstoffmischung gemäß irgendeinem der Ansprüche 1 bis 4 zum Färben oder Bedrucken von hydroxylgruppenhaltigen oder stickstoffhaltigen Fasermaterialien.

6. Farbstoff der Formel 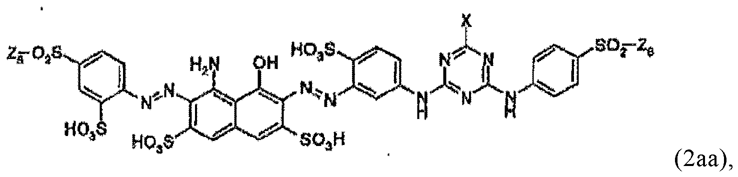 wobei
X Halogen ist und
Z₆ und Z₈ jeweils unabhängig voneinander Vinyl oder ein -CH₂-CH₂-U-Rest sind und U eine unter alkalischen Bedingungen entfernbare Gruppe ist.

7. Verwendung eines Farbstoffs der Formel (2aa) gemäß Anspruch 6 zum Färben oder Bedrucken von hydroxylgruppenhaltigen oder stickstoffhaltigen Fasermaterialien.

8. Wässrige Tinte, umfassend eine Farbstoffmischung gemäß Anspruch 1 oder einen Farbstoff gemäß Anspruch 6.

9. Verwendung einer wässrigen Tinte gemäß Anspruch 8 in einem Tintenstrahldruckverfahren zum Bedrucken von hydroxylgruppenhaltigen oder stickstoffhaltigen Fasermaterialien.

## Revendications

1. Mélange de colorants comprenant au moins un colorant de formule : 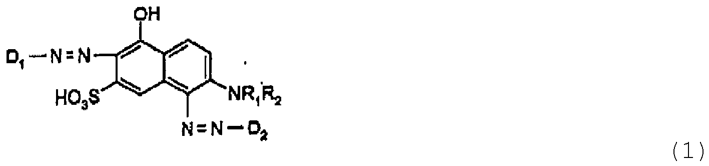 conjointement avec au moins un colorant de formule : 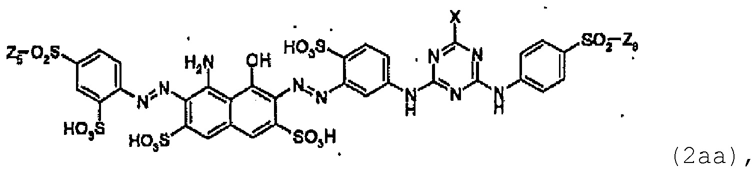 où :
- R₁ et R₂ représentent chacun indépendamment de l'autre hydrogène ou alkyle en C₁-C₈ non substitué ou substitué ;
- D₁ et D₂ représentent chacun indépendamment de l'autre un radical de formule : 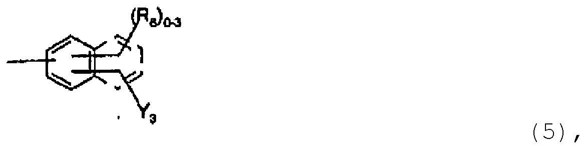 où :
- (R₆) ₀₋₃ désigne de 0 à 3 substituants identiques ou différents du groupe halogène, alkyle en C₁-C₄, alcoxy en C₁-C₄, carboxy, nitro et sulfo ;
- Y₃ est un radical capable de réagir avec les fibres de formule :
-SO₂-Z (3a),
-NH-CO- (CH₂)ₘ-SO₂-Z (3b),
-CONH- (CH₂)ₙ-SO₂-Z (3c),
-NH-CO-CH (Hal)-CH₂-Hal (3d),
-NH-CO-C(Hal)=CH₂ (3e)
ou 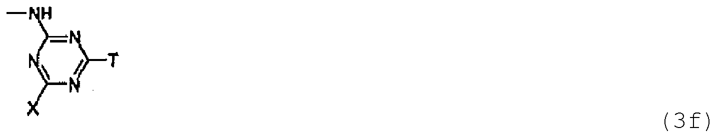
où :
- X représente halogène, T a indépendamment les mêmes définitions que X, ou est un substituant qui n'est pas réactif avec les fibres ou un radical capable de réagir avec les fibres, de formule :
-NH-(CH₂)₂₋₃-SO₂-Z (4a),
-NH-(CH₂)₂₋₃-O-(CH₂) ₂₋₃-SO₂-Z (4b), 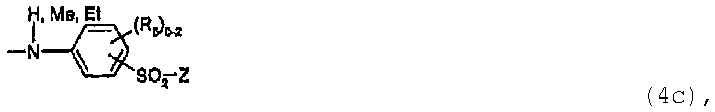 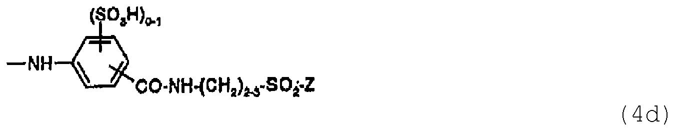
ou 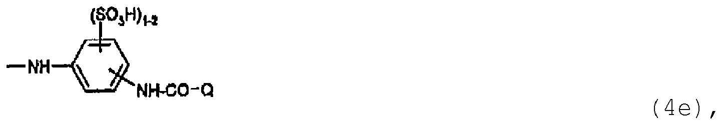
- (R₅)₀₋₂ désigne de 0 à 2 substituants identiques ou différents du groupe halogène, alkyle en C₁-C₄, alcoxy en C₁-C₄ et sulfo ;
- Z représente vinyle ou un radical -CH₂-CH₂-U et U est un groupe apte à être éliminé dans des conditions alcalines ;
- Q est un groupe -CH(Hal)-CH₂-Hal ou - C (Hal ) =CH₂ ;
- m et n représentent chacun indépendamment de l'autre le nombre 2, 3 ou 4 ; et
- Hal représente halogène ;
- Z₅ et Z₈ représentent chacun indépendamment de l'autre vinyle ou un radical -CH₂-CH₂-U et U est un groupe apte à être éliminé dans des conditions alcalines.

2. Mélange de colorants selon la revendication 1, dans lequel :
- D₁ et D₂ représentent chacun indépendamment de l'autre un radical de formule : 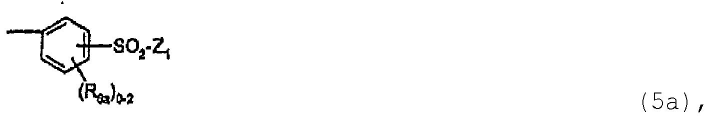 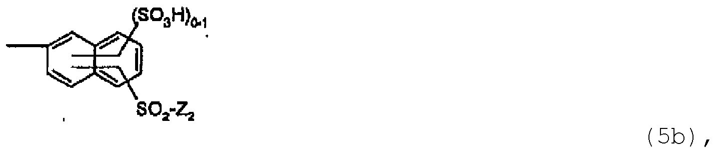 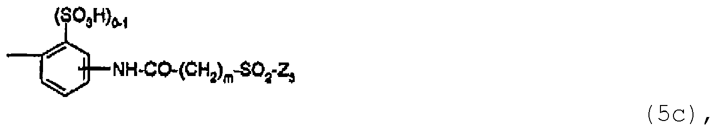 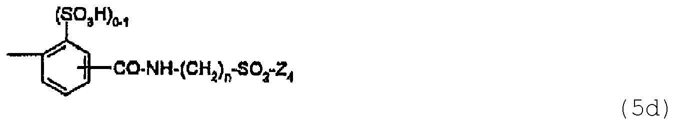 ou 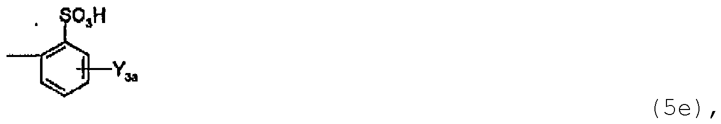 où :
- (R₆ₐ) ₀₋₂ désigne de 0 à 2 substituants identiques ou différents du groupe halogène, alkyle en C₁-C₄, alcoxy en C₁-C₄ et sulfo ;
- Y₃ₐ représente α, β-dibromopropionylamino ou α-bromoacryloylamino ;
- m est le nombre 2 ou 3 ;
- n est le nombre 2 ou 3 ; et
- Z₁, Z₂, 2₃ et Z₄ représentent chacun indépendamment les uns des autres vinyle, β-chloroéthyle ou β - sulfatoéthyle.

3. Mélange de colorants selon l'une ou l'autre des revendications 1 et 2, dans lequel R₁ et R₂ représentent hydrogène.

4. Mélange de colorants selon l'une quelconque des revendications 1 à 3, dans lequel
- R₁ et R₂ sont hydrogène ;
- D₁ est un radical de formule : 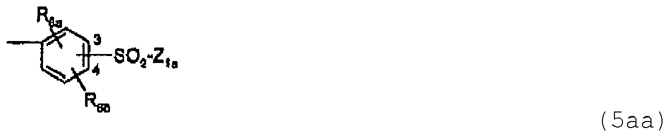 et
- D₂ est un radical de formule : 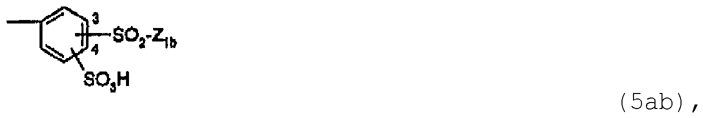 où :
- R₈ₐ et R_{8b} représentent chacun indépendamment de l'autre méthyle ou méthoxy, et
- Z₁ₐ et Z_{1b} représentent chacun indépendamment de l'autre vinyle, β-chloroéthyle ou β-sulfatoéthyle.

5. Utilisation d'un mélange de colorants selon l'une quelconque des revendications 1 à 4 dans la teinture ou l'impression de matières fibreuses contenant des groupes hydroxyle ou contenant de l'azote.

6. Colorant de formule : 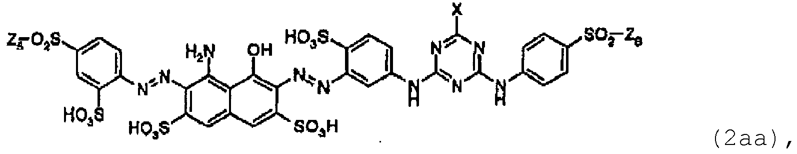 où :
- X représente halogène ; et
- Z₆ et Z₈ représentent chacun indépendamment de l'autre vinyle ou un radical -CH₂-CH₂-U et U est un groupe apte à être éliminé dans des conditions alcalines.

7. Utilisation d'un colorant de formule (2aa) selon la revendication 6 dans la teinture ou l'impression de matières fibreuses contenant des groupes hydroxyle ou contenant de l'azote.

8. Encre aqueuse comprenant un mélange de colorants selon la revendication 1 ou un colorant selon la revendication 6.

9. Utilisation d'une encre aqueuse selon la revendication 8 dans un procédé d'impression par et d'encre pour l'impression de matières fibreuses contenant des groupes hydroxyle ou contenant de l'azote.
